# EUROPEAN PATENT APPLICATION

(11) **EP 4 629 430 A1**
(43) Date of publication of application: **08.10.2025**
(21) Application number: 22967223.3
(22) Date of filing: 01.12.2022
(51) Int. Cl.: H01M 50/562, H01M 50/503, H01M 50/505, H01M 50/516, H01M 50/522, H01M 50/55, H01M 50/553, H01M 50/566, H01M 50/567

(54) **ELECTRODE TERMINAL AND BATTERY**

(71) Applicant: Vehicle Energy Japan Inc., Ibaraki 312-8505 (JP)
(72) Inventor: AOKI, Sadayuki, Hitachinaka-shi, Ibaraki 312-8505 (JP)
(74) Representative: MERH-IP Matias Erny Reichl Hoffmann Patentanwälte PartG mbB
(86) International application number: PCT/JP2022/044479
(87) International publication number: WO 2024/116393

(57) **Abstract**

An electrode terminal (negative electrode terminal 420) includes: a first member 421 that is electrically connected with a charge/discharge body 100 of a battery **1,** and includes a first metal (copper or a copper alloy); a second member 422 that includes a first insertion section 422x into which the first member 421 is inserted, the second member 422 being bonded with the first member 421 and including the first metal (copper or a copper alloy); and a third member 423 that includes a second insertion section 423x into which the first member 421 is inserted, the third member 423 being bonded with the second member 422 and including a second metal (aluminum or an aluminum alloy) which is a material different from the first metal (copper or a copper alloy). The third member 423 is bonded with a conductive member (busbar 10) including the second metal (aluminum or an aluminum alloy), on a facing surface P facing the conductive member (busbar 10) that electrically connects a first battery 1 and a second battery **1.** The first member 421 and the third member 423 are adjacent to each other on a side of the facing surface P.

## Description

### Technical Field

The present invention relates to an electrode terminal and a battery.

### Background Art

There is a conventionally known technology to convert the material of an electrode terminal of a battery (e.g. see Patent Document 1).

### Prior Art Document

### Patent Document

Patent Document 1: Japanese Patent No. 5656592

### Summary of the Invention

### Problem to be Solved by the Invention

It is demanded to enhance characteristics of an electrode terminal of a battery whose material has been converted.

### Means for Solving the Problem

An electrode terminal includes a first member, a second member, and a third member. The first member is electrically connected with a charge/discharge body of a battery, and includes a first metal. The second member includes a first insertion section into which the first member is inserted, the second member being bonded with the first member and including the first metal. A third member includes a second insertion section into which the first member is inserted, the third member being bonded with the second member and including a second metal which is a material different from the first metal. The third member is bonded with a conductive member including the second metal, on a facing surface facing the conductive member that electrically connects a first battery and a second battery. The first member and the third member are adjacent to each other on a facing surface side.

A battery has the electrode terminal described above, and a charge/discharge body electrically connected with the electrode terminal.

An electrode terminal includes a first member, a second member, and a third member. The first member is electrically connected with a charge/discharge body of a battery, and includes a first metal. The second member is bonded with the first member, and includes the first metal. A third member is bonded with the second member, and includes a second metal which is a material different from the first metal. The third member is not swage-bonded with the first member. The third member is bonded with a conductive member including the second metal, on a facing surface facing the conductive member that electrically connects a first battery and a second battery. The first member, the second member, and the third member are adjacent to each other on a side of the facing surface.

An electrode terminal includes a first member, a second member, and a third member. The first member is electrically connected with a charge/discharge body of a battery, and includes a first metal. The second member is bonded with the first member, and includes the first metal. A third member is bonded with the second member, and includes a second metal which is a material different from the first metal. The third member is bonded with a conductive member including the second metal, on a facing surface facing the conductive member that electrically connects a first battery and a second battery. The first member does not protrude toward the conductive member beyond the third member on a side of the facing surface. The third member and the conductive member are bonded across the first member.

### Advantages of the Invention

It is possible to enhance characteristics of an electrode terminal of a battery whose material has been converted.

### Brief Description of the Drawings

FIG. 1 is a perspective view depicting a battery 1 according to a first embodiment.
FIG. 2 is a cross-sectional perspective view depicting constituent members around a negative electrode terminal 420 of the battery 1.
FIG. 3 is a side view depicting constituent members depicted in FIG. **2****.**
FIG. 4 is a cross-sectional perspective view depicting constituent members around a positive electrode terminal 410 of the battery 1.
FIG. 5 is a side view depicting constituent members depicted in FIG. **4****.**
FIG. 6 is a partially exploded perspective view depicting the battery 1.
FIG. 7 is a perspective view depicting a charge/discharge body 100 of the battery 1.
FIG. 8 is a partial cross-sectional side view depicting the charge/discharge body 100 depicted in FIG. 7.
FIG. 9 is a partial cross-sectional side view depicting the charge/discharge body 1100 according to a modification example.
FIG. 10 is an exploded perspective view depicting constituent members around the negative electrode terminal 420 of the battery 1.
FIG. 11 is an exploded perspective view depicting constituent members around a cleavage valve 530 and a sealing plug 540 of the battery 1.
FIG. 12 is an exploded perspective view depicting constituent members around the positive electrode terminal 410 of the battery 1.
FIG. 13 is a cross-sectional perspective view depicting the negative electrode terminal 420 according to the first embodiment.
FIG. 14 is an exploded perspective view depicting the negative electrode terminal 420 depicted in FIG. 13.
FIG. 15 is a perspective view depicting bonding between a plurality of batteries 1 and a busbar 10.
FIG. 16 is an end view depicting the negative electrode terminal 420 and the busbar 10 according to the first embodiment.
FIG. 17 is an end view depicting a negative electrode terminal 430 and the busbar 10 according to a second embodiment.
FIG. 18 is an end view depicting a negative electrode terminal 440 and the busbar 10 according to a third embodiment.
FIG. 19 is an end view depicting a negative electrode terminal 450 and the busbar 10 according to a fourth embodiment.
FIG. 20 is an end view depicting a negative electrode terminal 460 and a busbar 20 according to a fifth embodiment.
FIG. 21 is an end view depicting a negative electrode terminal 470 and the busbar 10 according to a sixth embodiment.
FIG. 22 is an end view depicting a negative electrode terminal 480 and the busbar 10 according to a seventh embodiment.
FIG. 23 is a cross-sectional perspective view depicting a negative electrode terminal 490A according to an eighth embodiment.
FIG. 24 is an exploded perspective view depicting the negative electrode terminal 490A depicted in FIG. 23.
FIG. 25 is a cross-sectional perspective view depicting a negative electrode terminal 490B according to a modification example of the eighth embodiment.

### Modes for Carrying Out the Invention

Embodiments for implementing the present invention are explained with reference to the figures. In order to facilitate understanding of each embodiment, the sizes or ratios of constituent members are exaggerated in each figure in some cases. In each figure, identical reference characters are given to identical constituent elements. In each figure, the longer-side direction X, shorter-side direction Y, and height direction Z of a battery 1 are represented by arrows. In each figure, the longer-side direction X, shorter-side direction Y, and height direction Z of the battery 1 represent relative positional relations in the figure. That is, in a case where the battery 1 is rotated 180 degrees to arrange the upper surface and the lower surface in the reversed state or in a case where the battery 1 is rotated 90 degrees to arrange the upper surface as a side surface, the longer-side direction X, shorter-side direction Y, and height direction Z of the battery 1 change.

### (Configuration of Battery 1 Including Negative Electrode Terminal 420 According to First Embodiment)

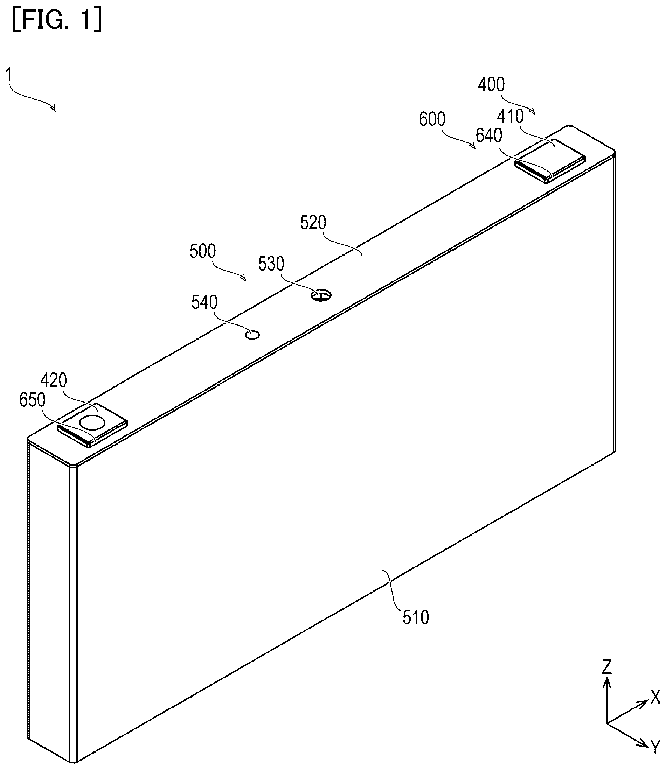

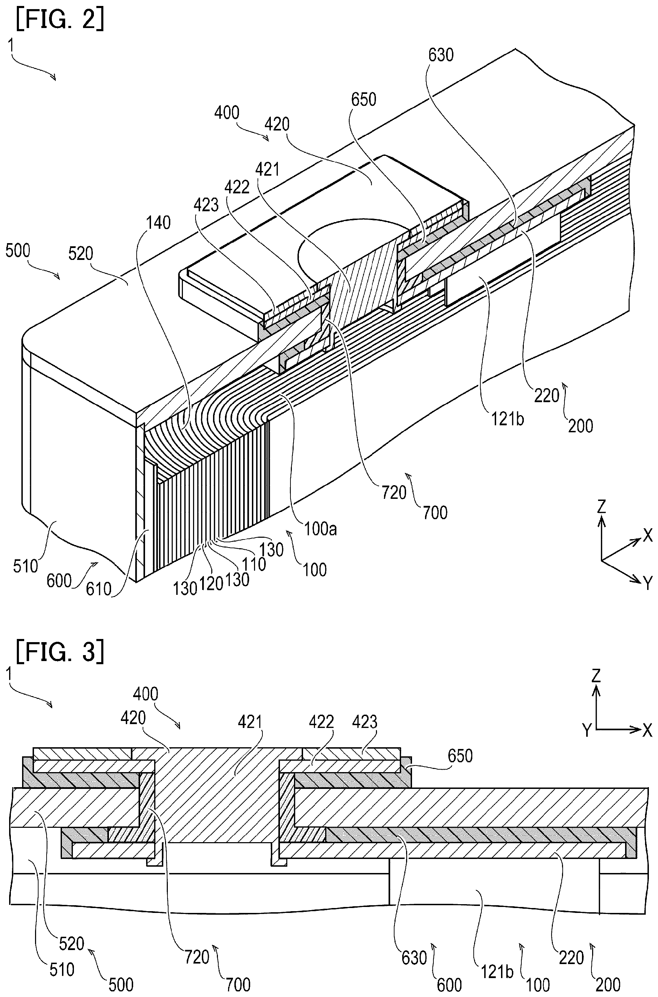

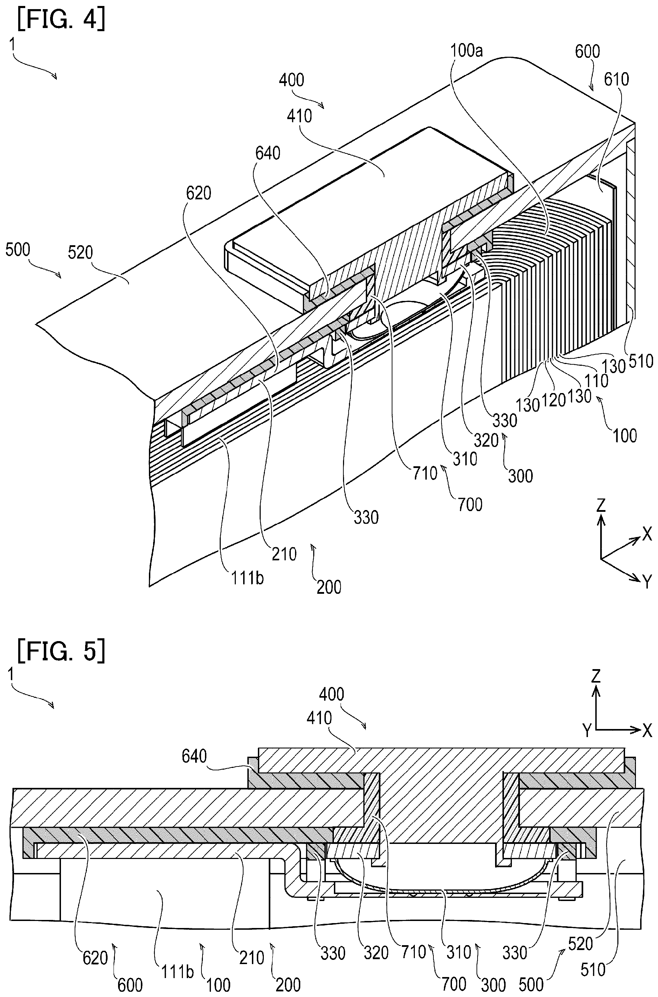

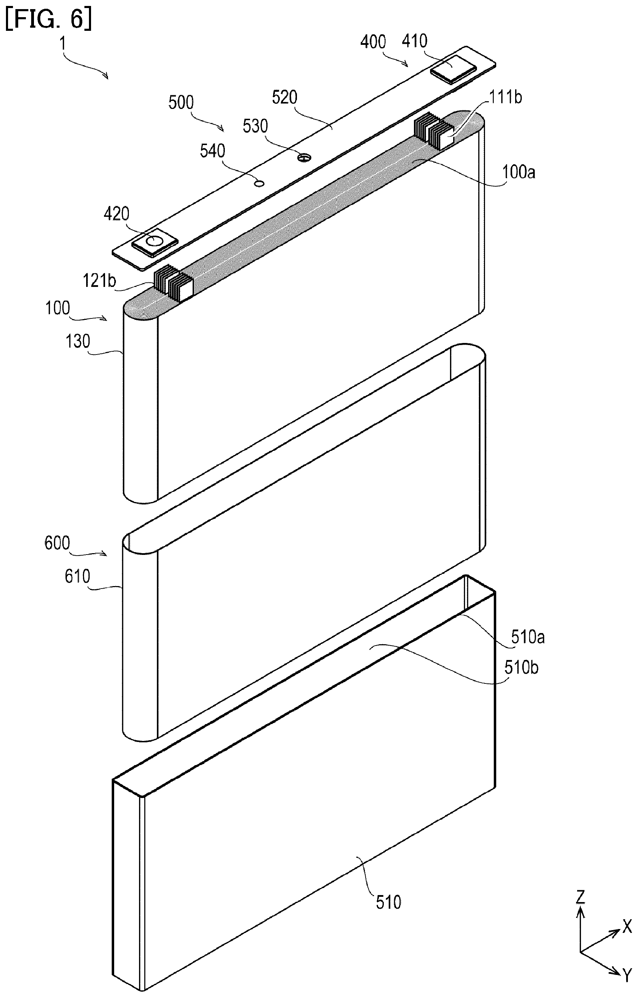

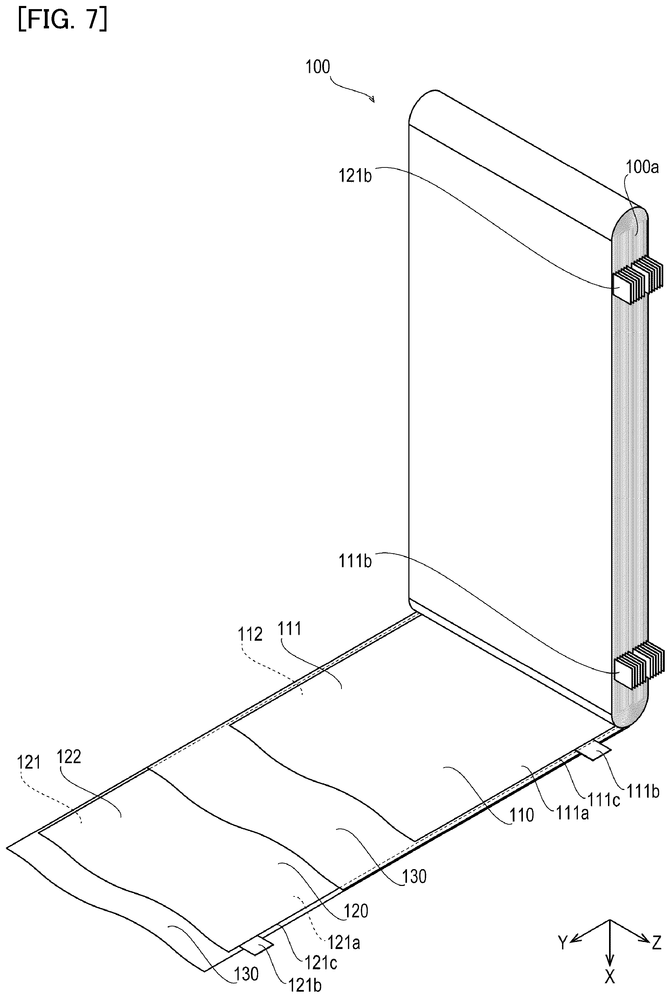

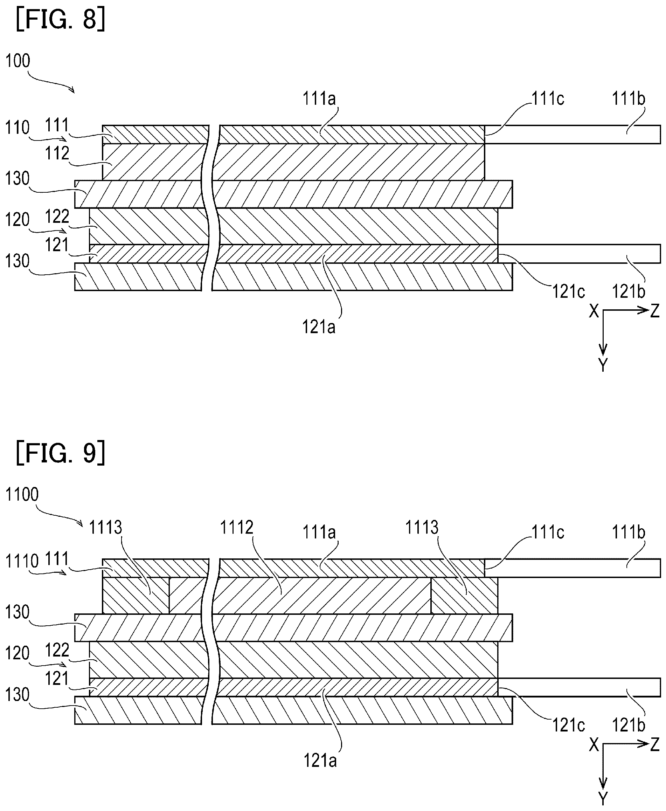

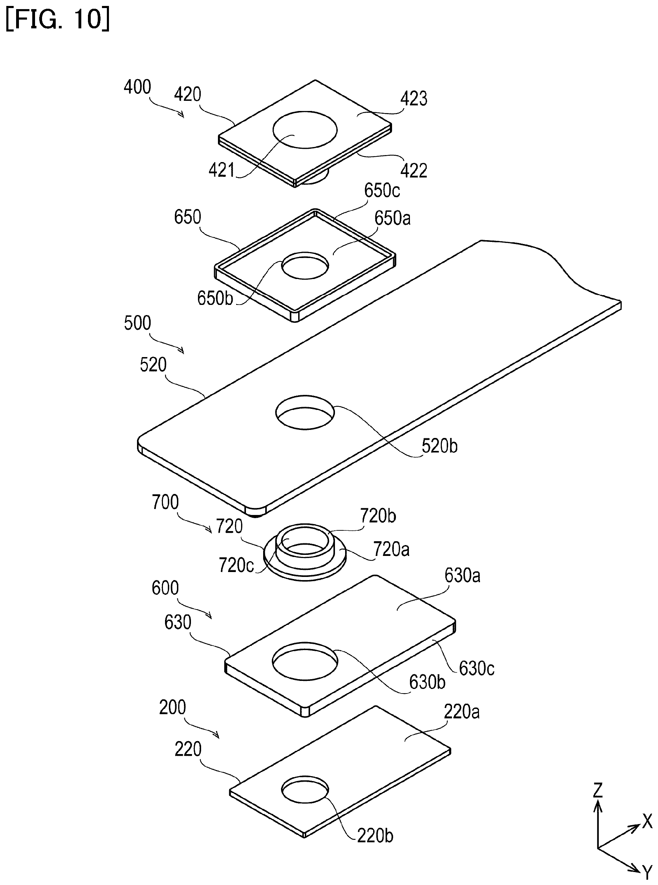

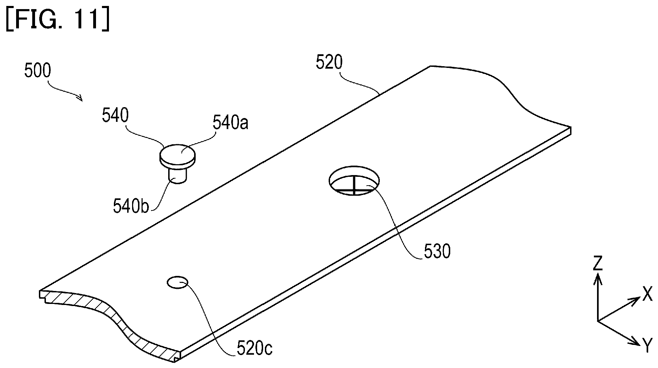

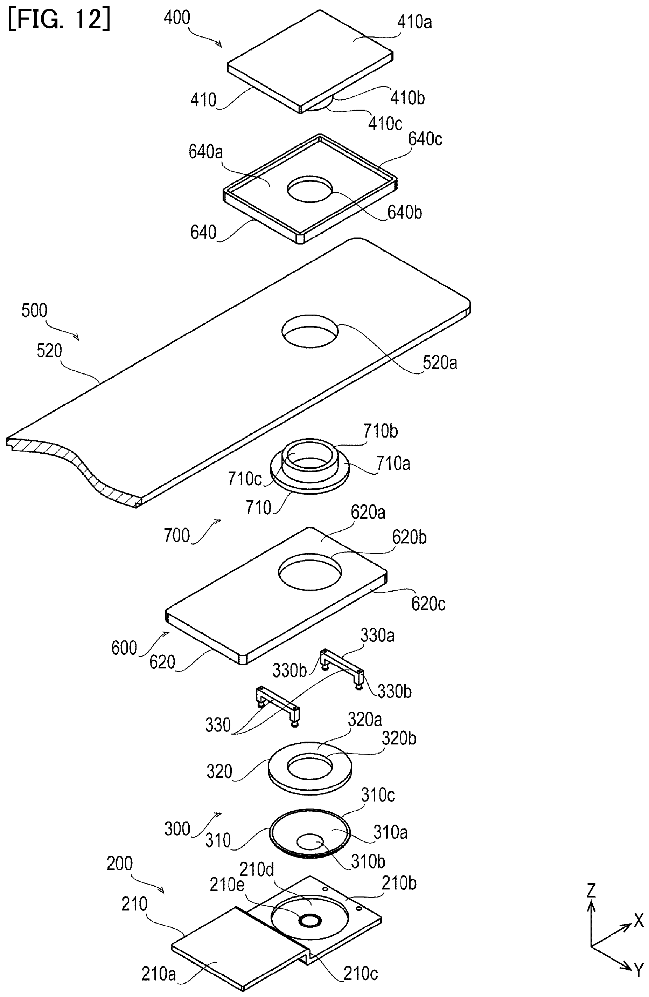

The configuration of the battery 1 is explained with reference to FIG. 1 to FIG. 16. FIG. 1 is a perspective view depicting the battery 1 according to the first embodiment. FIG. 2 is a cross-sectional perspective view depicting constituent members around the negative electrode terminal 420 of the battery 1. FIG. 3 is a side view depicting constituent members depicted in FIG. 2. FIG. 4 is a cross-sectional perspective view depicting constituent members around a positive electrode terminal 410 of the battery 1. FIG. 5 is a side view depicting constituent members depicted in FIG. 4. FIG. 6 is a partially exploded perspective view depicting the battery 1. FIG. 7 is a perspective view depicting a charge/discharge body 100 of the battery 1. FIG. 8 is a partial cross-sectional side view depicting the charge/discharge body 100 depicted in FIG. 7. FIG. 9 is a partial cross-sectional side view depicting the charge/discharge body 1100 according to a modification example. FIG. 10 is an exploded perspective view depicting constituent members around the negative electrode terminal 420 of the battery 1. FIG. 11 is an exploded perspective view depicting constituent members around a cleavage valve 530 and a sealing plug 540 of the battery 1. FIG. 12 is an exploded perspective view depicting constituent members around the positive electrode terminal 410 of the battery 1.

The battery 1 includes: the charge/discharge body 100 that charges and discharges electricity; a current collector 200 connected with the charge/discharge body 100; a current interrupter 300 connected with the current collector 200; an electrode terminal 400 connected with the current collector 200 or the current interrupter 300; an exterior body 500 housing constituent members of the battery 1 or to which constituent members of the battery 1 are attached; an insulator 600 that insulates constituent members of the battery 1 from the exterior body 500; and a sealing body 700 that seals constituent members of the battery 1 and the exterior body 500.

The charge/discharge body 100 charges and discharges electricity. The charge/discharge body 100 depicted in FIG. 2 to FIG. 8 includes a positive electrode 110, a negative electrode 120, a separator 130, and an electrolyte 140. The charge/discharge body 100 is formed by winding, in a rectangular parallelepiped shape, a constituent member formed by stacking the positive electrode 110, the separator 130, the negative electrode 120, and the separator 130 in this order.

The positive electrode 110 includes an elongated positive electrode current collecting layer 111, and a positive electrode active material layer 112 bonded to the positive electrode current collecting layer 111. The positive electrode current collecting layer 111 includes a current collecting section 111a and positive electrode tabs 111b. The current collecting section 111a is bonded with the positive electrode active material layer 112. The positive electrode active material layer 112 faces the entire area along the shorter-side direction of the current collecting section 111a, for example, as depicted in FIG. **8****.** From a side edge 111c along the longer-side direction of the current collecting section 111a, the positive electrode tabs 111b protrude in the shorter-side direction of the current collecting section 111a. The positive electrode tabs 111b are formed integrally with the current collecting section 111a. A plurality of the positive electrode tabs 111b are formed in the one current collecting section 111a. The current collecting section 111a is formed using aluminum or an aluminum alloy, for example. The positive electrode active material layer 112 includes a positive electrode active material formed using a lithium-containing composite oxide, a binder, an electrical conduction agent, and the like. For the lithium-containing composite oxide, a metal element like nickel (Ni), cobalt (Co), or manganese (Mn), and lithium (Li) are used, for example.

The negative electrode 120 includes an elongated negative electrode current collecting layer 121, and a negative electrode active material layer 122 bonded to the negative electrode current collecting layer 121. The negative electrode current collecting layer 121 includes a current collecting section 121a and negative electrode tabs 121b. The current collecting section 121a of the negative electrode 120 have a width along the shorter-side direction, which width is longer than the width along the shorter-side direction of the current collecting section 111a of the positive electrode 110, as depicted in FIG. **8****.** Both ends along the shorter-side direction of the current collecting section 111a of the positive electrode 110 are positioned within the range along the shorter-side direction of the current collecting section 121a of the negative electrode 120 with the separator 130 being interposed between the current collecting section 111a and the current collecting section 121a. The current collecting section 121a is bonded with the negative electrode active material layer 122. The negative electrode active material layer 122 faces the entire area along the shorter-side direction of the current collecting section 121a, for example. The negative electrode tabs 121b protrude in the shorter-side direction of the current collecting section 121a from a side edge 121c along the longer-side direction of the current collecting section 121a. The negative electrode tabs 121b protrude in the same direction as the protrusion of the positive electrode tabs 111b of the positive electrode 110 in a state where the negative electrode tabs 121b are stacked on the positive electrode 110 with the separator 130 being interposed therebetween. The negative electrode tabs 121b are separated from the positive electrode tabs 111b of the positive electrode 110 in a state where the negative electrode tabs 121b are stacked on the positive electrode 110 with the separator 130 being interposed therebetween. The negative electrode tabs 121b are formed integrally with the current collecting section 121a. A plurality of the negative electrode tabs 121b are formed in the one current collecting section 121a. The current collecting section 121a is formed using copper or a copper alloy, for example. The negative electrode active material layer 122 includes a negative electrode active material formed using a carbon-based material, a binder, an electrical conduction agent, and the like. For the carbon-based material, graphite is used, for example.

The separator 130 allows lithium ions to pass between the positive electrode 110 and the negative electrode 120 while insulating the positive electrode 110 from the negative electrode 120. The separator 130 is formed in an elongated shape. The separator 130 has a width along the shorter-side direction which is longer than the widths of the current collecting section 111a of the positive electrode 110 and the current collecting section 121a of the negative electrode 120 as depicted in FIG. **8****.** Both ends along the shorter-side direction of the current collecting section 111a of the positive electrode 110 are positioned within the range along the shorter-side direction of the separator 130, and both ends along the shorter-side direction of the current collecting section 121a of the negative electrode 120 are positioned within the range along the shorter-side direction of the separator 130. The separator 130 is formed using a porous material. For the separator 130, Polyethylene (PE: polyethylene) or polypropylene (PP: polypropylene) is used. Instead of the separator 130, a heat-resistant insulating member may be used. In the case of such a configuration, the separator 130 is not essential.

The electrolyte 140 includes an organic solvent, a supporting electrolyte, and an additive. The electrolyte 140 is also referred to as an electrolyte solution. For the organic solvent, a carbonate ester is used, for example. For the supporting electrolyte, a lithium salt is used, for example.

The charge/discharge body 1100 according to a modification example of the charge/discharge body 100 is explained with reference to FIG. **9****.** The configuration of a positive electrode 1110 in the charge/discharge body 1100 is different from the configuration of the positive electrode 110 in the charge/discharge body 100. In the configuration of the charge/discharge body 1100, constituent elements which are the same as constituent elements of the charge/discharge body 100 are given the same reference characters, and explanations thereof are omitted. A positive electrode active material layer 1112 of the charge/discharge body 1100 faces portions along the shorter-side direction of the current collecting section 111a excluding both ends along the shorter-side direction of the current collecting section 111a. Heat-resistant insulation layers 1113 of the charge/discharge body 1100 are bonded to both the ends along the shorter-side direction of the current collecting section 111a and base end portions of the positive electrode tabs 111b.

The current collector 200 is connected with the charge/discharge body 100. The current collector 200 is also referred to as a current collecting board. The current collector 200 depicted in FIG. 2 to FIG. **5****,** FIG. 10, and FIG. 12 includes a positive electrode current collecting board 210 and a negative electrode current collecting board 220.

The positive electrode current collecting board 210 makes the positive electrode tabs 111b of the charge/discharge body 100 and the positive electrode terminal 410 conductive with each other via the current interrupter 300. The positive electrode current collecting board 210 includes a first base section 210a of a rectangular parallelepiped board shape, a second base section 210b of a rectangular parallelepiped board shape, and a coupling section 210c that couples the first base section 210a and the second base section 210b stepwise at different heights. A recessed section 210d where the thickness of the second base section 210b is thin is formed on the upper surface of the second base section 210b. A fragile section 210e where the recessed section 210d is depressed in a ring shape and is formed partially fragile is formed at the center of the recessed section 210d. The positive electrode current collecting board 210 is formed using aluminum or an aluminum alloy, for example.

The negative electrode current collecting board 220 makes the negative electrode tabs 121b of the charge/discharge body 100 and the negative electrode terminal 420 conductive with each other. The negative electrode current collecting board 220 includes a base section 220a of a rectangular parallelepiped board shape, and an insertion hole 220b penetrating the base section 220a. An insertion section 420b of the negative electrode terminal 420 is inserted into the insertion hole 220b of the negative electrode current collecting board 220. The negative electrode current collecting board 220 is formed using copper or a copper alloy, for example.

The current interrupter 300 interrupts the current path between the current collector 200 and the positive electrode terminal 410 by being separated from the positive electrode current collecting board 210, when the internal pressure of the battery 1 rises to exceed a predetermined value. When the internal pressure of the battery 1 is equal to or lower than the predetermined value, the current interrupter 300 is kept bonded with the positive electrode current collecting board 210, and keeps the current path between the current collector 200 and the positive electrode terminal 410 uninterrupted. The current interrupter 300 is also referred to as a current interrupt member (CID: Current Interrupt Device). The current interrupter 300 depicted in FIG. **4,** FIG. **5****,** and FIG. 12 includes a diaphragm 310, a conductive member 320, and a pair of support bases 330.

The diaphragm 310 includes: a curved and cylindrical body section 310a; a disk-shaped first bonding section 310b provided on the tip end side of the body section 310a; and a ring-shaped second bonding section 310c provided on the base end side of the body section 310a. The first bonding section 310b is bonded to the recessed section 210d of the positive electrode current collecting board 210. The second bonding section 310c is bonded to the conductive member 320. The diaphragm 310 is separated from the positive electrode current collecting board 210 when the internal pressure of the battery 1 rises to exceed a predetermined value. The diaphragm 310 is formed using aluminum or an aluminum alloy, for example.

The conductive member 320 is formed in a cylindrical shape. The conductive member 320 includes a base section 320a of a disc-shape, and an insertion hole 320b which is an opening at the center of the base section 320a. The upper surface of the conductive member 320 is bonded with a positive-electrode-side first insulating board 620. The periphery of the lower surface of the conductive member 320 is bonded with the second bonding section 310c of the diaphragm 310. The conductive member 320 is formed using aluminum or an aluminum alloy, for example.

Each support base 330 includes a body section 330a of a rectangular parallelepiped shape extending in the shorter-side direction of the battery **1,** and leg sections 330b extending downwardly from both sides in the longer-side direction of the body section 330a. One support base 330 is provided to each of both ends of the diaphragm 310 along the longer-side direction of the battery **1.** The body sections 330a are attached to the positive-electrode-side first insulating board 620. The leg sections 330b are attached to the second base section 210b of the positive electrode current collecting board 210. The support base 330 is formed using an insulating resin, for example.

The electrode terminal 400 is connected with the current collector 200 or the current interrupter 300. The electrode terminal 400 depicted in FIG. 1 to FIG. 6, FIG. 10, and FIG. 12 to FIG. 16 include the positive electrode terminal 410 and the negative electrode terminal 420.

The positive electrode terminal 410 is connected with the conductive member 320 of the current interrupter 300. The positive electrode terminal 410 includes: a base section 410a of a rectangular parallelepiped board shape; an insertion section 410b of a columnar shape protruding downwardly from the base section 410a; and a bonding section 410c of a cylindrical shape protruding downwardly from the periphery of the base section 410a. The base section 410a contacts a base section 640a of a positive-electrode-side second insulating board 640. The insertion section 410b is inserted into an insertion hole 640b of the positive-electrode-side second insulating board 640, a positive-electrode-side insertion hole 520a of a lid 520, an insertion hole 620b of the positive-electrode-side first insulating board 620, and the insertion hole 320b of the conductive member 320. The bonding section 410c protrudes downwardly from the insertion hole 320b of the conductive member 320, and is bonded with the conductive member 320 by being pressed and widened radially outwardly. That is, the bonding section 410c is swaged to the periphery of the insertion hole 320b of the conductive member 320. Furthermore, the bonding section 410c is welded to the periphery of the insertion hole 320b of the conductive member 320. The positive electrode terminal 410 is formed using aluminum or an aluminum alloy, for example.

### (Configuration of Negative Electrode Terminal 420)

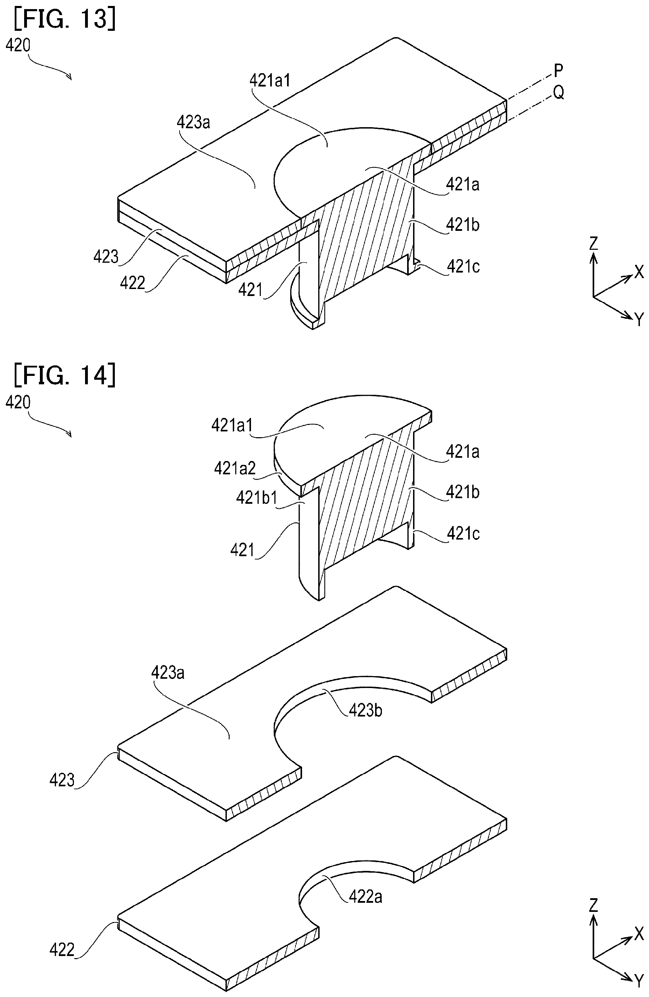

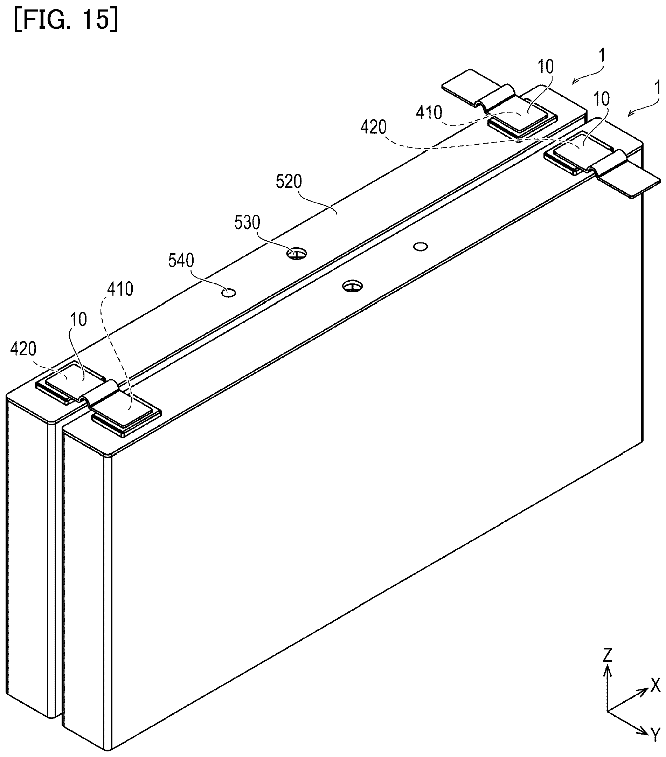

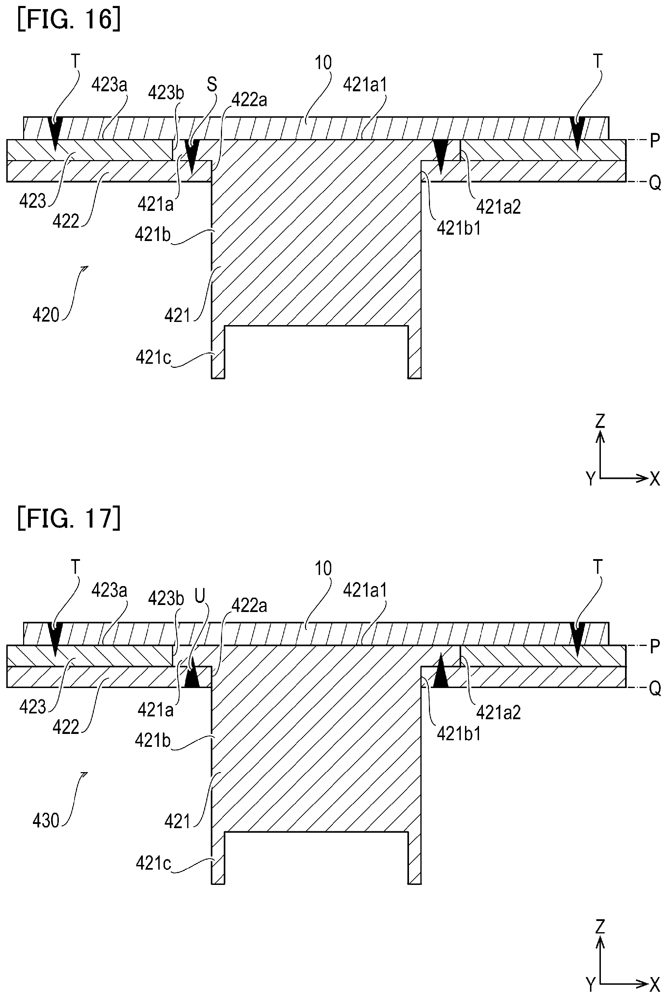

The configuration of the negative electrode terminal 420 is explained with reference to FIG. 13 to FIG. 16, and the like. FIG. 13 is a cross-sectional perspective view depicting the negative electrode terminal 420 according to the first embodiment. FIG. 14 is an exploded perspective view depicting the negative electrode terminal 420 depicted in FIG. 13. FIG. 15 is a perspective view depicting bonding between a plurality of batteries 1 and a busbar 10. FIG. 16 is an end view depicting the negative electrode terminal 420 and the busbar 10 according to the first embodiment.

The negative electrode terminal 420 is an electrode terminal. The negative electrode terminal 420 includes a first member 421, a second member 422, and a third member 423 as depicted in FIG. 14.

The first member 421 is electrically connected with the charge/discharge body 100 of the battery 1 via the negative electrode current collecting board 220. The first member 421 includes a first metal. The first metal is copper or a copper alloy, for example. That is, the first member 421 is formed using a material including copper or a copper alloy.

The first member 421 includes a head section 421a, a body section 421b, and a leg section 421c as depicted in FIG. 14 and FIG. 16. The head section 421a is formed in a columnar shape as depicted in FIG. 14. The head section 421a includes: a facing section 421a1 that faces the busbar 10 along the height direction Z of the battery 1; and an outer peripheral section 421a2 that faces the second member 422 along the longer-side direction X and shorter-side direction Y of the battery **1.** The head section 421a may be formed in a board shape.

The body section 421b of the first member 421 is formed in a columnar shape as depicted in FIG. 14. The body section 421b is formed integrally with the head section 421a, and is continuous with the head section 421a concentrically. The body section 421b has a smaller diameter and a longer length along the height direction Z of the battery 1 as compared to the head section 421a. The body section 421b includes an outer peripheral section 421b1 that faces the third member 423 along the longer-side direction X and shorter-side direction Y of the battery **1.** The body section 421b may be formed in a board shape.

The leg section 421c of the first member 421 is formed in a cylindrical shape as depicted in FIG. 14. The leg section 421c is formed integrally with the body section 421b, and is continuous with the body section 421b concentrically. The leg section 421c has the same outer diameter as the body section 421b. The leg section 421c faces the head section 421a with the body section 421b being interposed therebetween. The leg section 421c is bent outwardly such that the diameter of the leg section 421c becomes larger as depicted in FIG. 14 and is swage-bonded to the negative electrode current collecting board 220. The leg section 421c may be laser-bonded to the negative electrode current collecting board 220. The leg section 421c may be laser-bonded in a state where the leg section 421c is swage-bonded to the negative electrode current collecting board 220.

The second member 422 is bonded with the first member 421 as depicted in FIG. 14 and FIG. 16. The second member 422 includes the first metal. That is, the second member 422 is formed using a material including copper or a copper alloy.

The second member 422 is formed in a board shape as depicted in FIG. 14. The second member 422 includes a first insertion section 422a. The first member 421 is inserted into the first insertion section 422a. In the second member 422, the inner circumferential surface of the first insertion section 422a faces the outer peripheral section 421b1 of the body section 421b.

The second member 422 is laser-bonded, at a welded section S, with the first member 421 from the side of a facing surface P facing the busbar 10, as depicted in FIG. 16. The second member 422 and the first member 421 are laser-bonded in a state where the second member 422 and the first member 421 are stacked along the height direction Z of the battery 1, that is, in a state where the second member 422 and the first member 421 are superimposed along the height direction Z of the battery **1.** The facing surface P is a surface on which the negative electrode terminal 420 faces the busbar 10. The second member 422 is laser-bonded to a head section 431a of the first member 421 along an annular line. The second member 422 and the first member 421 may be laser-bonded along a linear line or along an arc-like line along the shorter-side direction Y or longer-side direction X of the battery 1 depicted in FIG. 15. The second member 422 and the first member 421 may be laser-bonded at dots. The second member 422 may be formed in a cylindrical shape.

The third member 423 is bonded with the second member 422 as depicted in FIG. 14 and FIG. 16. The third member 423 includes a second metal which is a material different from the first metal. The second metal is aluminum or an aluminum alloy, for example. That is, the third member 423 is formed using a material including aluminum or an aluminum alloy. The third member 423 formed using aluminum or the like and the second member 422 formed using copper or the like are formed using clad materials. That is, the third member 423 and the second member 422 are interatomically-bonded. The third member 423 and the second member 422 may be swage-bonded. The third member 423 and the second member 422 may be formed by non-melting bonding that excels in durability other than interatomic bonding. The third member 423 and the second member 422 may be formed by welding that excels in durability.

The third member 423 is formed in a board shape as depicted in FIG. 14. The third member 423 includes a facing section 423a that faces the busbar 10 along the height direction Z of the battery 1, as depicted in FIG. 14. The third member 423 includes a second insertion section 423b. The first member 421 is inserted into the second insertion section 423b. In the third member 423, the inner circumferential surface of the second insertion section 423b faces the outer peripheral section 421b1 of the body section 421b.

The third member 423 is provided, while being made flush with the first member 421, on the side of the facing surface P facing the busbar 10, as depicted in FIG. 16. The third member 423 is spaced apart from the first member 421 in a stacking direction (height direction Z) in which the first member 421 and the second member 422 are stacked, as depicted in FIG. 16. That is, the third member 423 does not overlap the first member 421 neither directly nor indirectly in the height direction Z of the battery 1.

The third member 423 is adjacent to the first member 421 along the longer-side direction X or shorter-side direction Y of the battery 1 on the side of the facing surface P facing the busbar 10, as depicted in FIG. 16. The third member 423 and the first member 421 face each other on a surface along the facing surface P facing the busbar 10, with no other constituent members of the negative electrode terminal 420 interposed therebetween. The third member 423 and the first member 421 face each other in a state where they are not in contact with each other, that is, in a state where a gap is provided therebetween. The gap has a size of several dozen micrometers to several hundred micrometers, for example. The gap may have a size of several hundred micrometers to several millimeters, for example. The distance may be formed to be equal to or smaller than the thickness in the stacking direction (height direction) of the inner circumferential surface of the second insertion section 423b of the third member 423, for example. The gap may be formed to have a size equal to or smaller than the thickness (height direction Z) of the second member 422, from the view point of rigidity of the negative electrode terminal 420. The gap may be formed to have a size equal to the distance between the outer peripheral section 421b1 of the first member 421 and the first insertion section 422a of the second member 422, from the view point of assemblability and stress reduction in the negative electrode terminal 420. The third member 423 and the first member 421 may face each other in a state where they are in contact with each other, that is, in a state where a gap is not provided therebetween.

The third member 423 is laser-bonded, at a welded section T, with the busbar 10 on the side of the facing surface P facing the busbar 10, as depicted in FIG. 16. The third member 423 and the busbar 10 are laser-bonded in a state where the third member 423 and the busbar 10 are stacked along the height direction Z of the battery 1, that is, in a state where the third member 423 and the busbar 10 are superimposed. The third member 423 is bonded with the busbar 10 at two or more locations placed across the first member 421 along a direction crossing the height direction Z. The direction crossing the height direction Z is the shorter-side direction Y or longer-side direction X of the battery 1. The third member 423 and the busbar 10 are laser-bonded at dots, along a linear line, along an arc-like line, or along an annular line.

The third member 423 is bonded with the busbar on the facing surface P facing the busbar 10, as depicted in FIG. 16. The first member 421 and the third member 423 are adjacent to each other along the longer-side direction X or shorter-side direction Y of the battery 1 on the side of the facing surface P facing the busbar 10, as depicted in FIG. 16. That is, the first member 421 and the third member 423 face each other on a surface along the facing surface P facing the busbar 10, with no other constituent members of the negative electrode terminal 420 being interposed therebetween. The first member 421 and the third member 423 are in a state where no other constituent members of the negative electrode terminal 420 are interposed therebetween when seen from the side of the facing surface P facing the busbar 10.

The first member 421 and the third member 423 face each other in a state where they are partially not in contact with each other, that is, in a state where partial gaps are provided along an annular line. The gaps have sizes of several micrometers to several hundred micrometers, for example. The gaps may have sizes of several hundred micrometers to several millimeters, for example.

The first member 421 and the third member 423 may face each other in a state where they are completely not in contact with each other, that is, in a state where a gap is provided along an annular line.

The first member 421 and the third member 423 may face each other in a state where they are in contact with each other, that is, in a state where a gap is not provided therebetween.

Here, where there are no gaps between the first member 421 and the third member 423, when the first member 421 and the third member 423 are seen from the side of the facing surface P facing the busbar 10, there does not exist the second member 422 at a gap between the first member 421 and the third member 423. Such a configuration is included in the configuration in which the first member 421 and the third member 423 are adjacent to each other along the longer-side direction X or shorter-side direction Y of the battery 1 on the side of the facing surface P facing the busbar 10.

In addition, even in the case of a configuration in which the gap cannot be recognized visually although there is a gap between the first member 421 and the third member 423, when the first member 421 and the third member 423 are seen from the side of the facing surface P facing the busbar 10, there does not exist the second member 422 at the gap between the first member 421 and the third member 423. Such a configuration also is included in the configuration in which the first member 421 and the third member 423 are adjacent to each other along the longer-side direction X or shorter-side direction Y of the battery 1 on the side of the facing surface P facing the busbar 10. The gap which cannot be recognized visually has a size of several micrometers to several dozen micrometers, for example.

On the other hand, in the case of a configuration in which a gap that can visually be recognized is provided between the first member 421 and the third member 423, when the first member 421 and the third member 423 are seen from the side of the facing surface P facing the busbar 10, the second member 422 can be checked through the gap between the first member 421 and the third member 423 in some cases. Such a configuration is included in the configuration in which the first member 421 and the third member 423 are adjacent to each other along the longer-side direction X or shorter-side direction Y of the battery 1 on the side of the facing surface P facing the busbar 10. That is, a configuration in which, even if the existence of another member like the second member 422 is checked through the gap between the first member 421 and the third member 423, another member is positioned below the first member 421 or the third member is included in the configuration in which the first member 421 and the third member 423 are adjacent to each other along the longer-side direction X or shorter-side direction Y of the battery 1 on the side of the facing surface P facing the busbar 10.

In the negative electrode terminal 420, the first member 421 and the second member 422 are made electrically conductive with each other by lap-joint bonding in the height direction Z of the battery 1. The second member 422 and the third member 423 are made electrically conductive with each other by being formed using clad materials.

The exterior body 500 houses constituent members of the battery 1, or constituent members of the battery 1 are attached to the exterior body 500. The exterior body 500 depicted in FIG. 1 to FIG. 6, and FIG. 10 to FIG. 12 includes a container 510, the lid 520, the cleavage valve 530, and the sealing plug 540.

The container 510 houses the charge/discharge body 100 and the like. The container 510 is formed using a metallic can formed in a rectangular parallelepiped shape. The container 510 includes an opening 510a which is an opening along the longer-side direction, and a housing section 510b continuous with the opening 510a. The container 510 is formed using aluminum or an aluminum alloy, for example.

The lid 520 seals the opening 510a of the container 510. The container 510 is formed using a metallic board in a long-board shape. The lid 520 has one end side in the longer-side direction, on which end side the positive-electrode-side insertion hole 520a formed as a circular through-hole is formed. The insertion section 410b of the positive electrode terminal 410 is inserted into the positive-electrode-side insertion hole 520a. The lid 520 has the other end side in the longer-side direction, on which end side a negative-electrode-side insertion hole 520b formed as a circular through-hole is formed. The insertion section 420b of the negative electrode terminal 420 is inserted into the negative-electrode-side insertion hole 520b. The lid 520 has a liquid-injection insertion hole 520c formed as a circular through-hole between the positive-electrode-side insertion hole 520a and the negative-electrode-side insertion hole 520b. An insertion section 540b of the sealing plug 540 is inserted into the liquid-injection insertion hole 520c. The lid 520 is welded with the container 510. The lid 520 is formed using aluminum or an aluminum alloy, for example.

The cleavage valve 530 is formed integrally with the lid 520 as depicted in FIG. 11. The cleavage valve 530 is cleaved when the internal pressure of the battery 1 has reached a predetermined value, and makes the internal pressure of the battery 1 equal to atmospheric pressure. The cleavage valve 530 is also referred to as a safety valve.

The sealing plug 540 seals the liquid-injection insertion hole 520c of the lid 520 as depicted in FIG. **6****.** The sealing plug 540 is formed in a columnar shape. The sealing plug 540 includes, as depicted in FIG. 11, a head section 540a having a relatively large outer diameter and the insertion section 540b having a relatively small outer diameter, which is continuous with the head section 540a. The head section 540a of the sealing plug 540 is welded with the lid 520. The sealing plug 540 is formed using aluminum or an aluminum alloy, for example.

The insulator 600 insulates constituent members of the battery 1 from the exterior body 500. The insulator 600 depicted in FIG. 2 to FIG. 5, FIG. 10, and FIG. 12 includes an insulating cover 610, the positive-electrode-side first insulating board 620, a negative-electrode-side first insulating board 630, the positive-electrode-side second insulating board 640, and a negative-electrode-side second insulating board 650.

The insulating cover 610 covers the charge/discharge body 100. The insulating cover 610 exposes one side section 100a of the charge/discharge body 100 outwardly, and covers portions other than the one side section 100a of the charge/discharge body 100. The insulating cover 610 is formed as a pentahedron, for example, and is folded in a box shape. The insulating cover 610 is formed using polypropylene (polypropylene), for example.

The positive-electrode-side first insulating board 620 insulates the positive electrode current collecting board 210 and the conductive member 320 from the lid 520. The positive-electrode-side first insulating board 620 includes a base section 620a of a rectangular parallelepiped board shape, the insertion hole 620b penetrating the base section 620a, and a protruding portion 620c that surrounds the side edge of the base section 620a annularly and protrudes in a direction away from the lid 520. The positive-electrode-side first insulating board 620 houses the positive electrode current collecting board 210, the conductive member 320, and the like in a space formed by the base section 620a and the protruding portion 620c. The insertion section 410b of the positive electrode terminal 410 is inserted into the insertion hole 620b. The positive-electrode-side first insulating board 620 is formed using an insulating resin, for example.

The negative-electrode-side first insulating board 630 insulates the negative electrode current collecting board 220 from the lid 520. The negative-electrode-side first insulating board 630 includes a base section 630a of a rectangular parallelepiped board shape, an insertion hole 630b penetrating the base section 630a, and a protruding portion 630c that surrounds the side edge of the base section 630a annularly and protrudes in a direction away from the lid 520. The negative-electrode-side first insulating board 630 houses the negative electrode current collecting board 220 in a space formed by the base section 630a and the protruding portion 630c. The insertion section 420b of the negative electrode terminal 420 is inserted into the insertion hole 630b. The negative-electrode-side first insulating board 630 is formed using an insulating resin, for example.

The positive-electrode-side second insulating board 640 insulates the positive electrode terminal 410 from the lid 520. The positive-electrode-side second insulating board 640 includes the base section 640a of a rectangular parallelepiped board shape, the insertion hole 640b penetrating the base section 640a, and a protruding portion 640c that surrounds the side edge of the base section 640a annularly and protrudes in a direction away from the lid 520. The positive-electrode-side second insulating board 640 houses the positive electrode terminal 410 in a space formed by the base section 640a and the protruding portion 640c. The insertion section 410b of the positive electrode terminal 410 is inserted into the insertion hole 640b. The positive-electrode-side second insulating board 640 is formed using an insulating resin, for example.

The negative-electrode-side second insulating board 650 insulates the negative electrode terminal 420 from the lid 520. The negative-electrode-side second insulating board 650 includes a base section 650a of a rectangular parallelepiped board shape, the insertion hole 650b penetrating the base section 650a, and a protruding portion 650c that surrounds the side edge of the base section 650a annularly and protrudes in a direction away from the lid 520. The negative-electrode-side second insulating board 650 houses the negative electrode terminal 420 in a space formed by the base section 650a and the protruding portion 650c. The insertion section 420b of the negative electrode terminal 420 is inserted into the insertion hole 650b. The negative-electrode-side second insulating board 650 is formed using an insulating resin, for example.

The sealing body 700 seals constituent members of the battery 1 and the exterior body 500. The sealing body 700 depicted in FIG. 2 to FIG. **5****,** FIG. 10, and FIG. 12 includes a positive-electrode-side gasket 710 and a negative-electrode-side gasket 720.

The positive-electrode-side gasket 710 seals the lid 520 on a side of the positive electrode terminal 410 to seal up the exterior body 500. The positive-electrode-side gasket 710 is formed in a cylindrical shape. The positive-electrode-side gasket 710 includes: a first insertion section 710a having a relatively large outer diameter; a second insertion section 710b having a relatively small outer diameter, which is continuous with the first insertion section 710a; and an insertion hole 710c penetrating the first insertion section 710a and the second insertion section 710b. The positive-electrode-side gasket 710 is provided between the positive electrode terminal 410 and the positive electrode current collecting board 210 as depicted in FIG. 5. The first insertion section 710a is inserted into the insertion hole 620b of the positive-electrode-side first insulating board 620 depicted in FIG. 12. The second insertion section 710b is inserted into the positive-electrode-side insertion hole 520a of the lid 520 and the insertion hole 640b of the positive-electrode-side second insulating board 640 depicted in FIG. 12. The insertion section 410b of the positive electrode terminal 410 depicted in FIG. 12 is inserted into the insertion hole 710c. The positive-electrode-side gasket 710 is formed using an insulative and elastic rubber, for example.

The negative-electrode-side gasket 720 seals the lid 520 on a side of the negative electrode terminal 420 to seal up the exterior body 500. The negative-electrode-side gasket 720 is formed in a cylindrical shape. The negative-electrode-side gasket 720 includes: a first insertion section 720a having a relatively large outer diameter; a second insertion section 720b having a relatively small outer diameter, which is continuous with the first insertion section 720a; and an insertion hole 720c penetrating the first insertion section 720a and the second insertion section 720b. The negative-electrode-side gasket 720 is provided between the second member 422 of the negative electrode terminal 420 and the negative electrode current collecting board 220 as depicted in FIG. **3****.** The first insertion section 720a is inserted into the insertion hole 630b of the negative-electrode-side first insulating board 630 depicted in FIG. 11. The second insertion section 720b is inserted into the negative-electrode-side insertion hole 520b of the lid 520 and the insertion hole 650b of the negative-electrode-side second insulating board 650 depicted in FIG. 11. The body section 421b of the first member 421 of the negative electrode terminal 420 depicted in FIG. 11 is inserted into the insertion hole 720c. The negative-electrode-side gasket 720 is formed using an insulative and elastic rubber, for example.

### (Configuration of Busbar 10)

The busbar 10 is a conductive member. The busbar 10 electrically connects a first battery 1 and a second battery 1 that are adjacent to each other along the shorter-side direction Y of the batteries 1, for example, as depicted in FIG. 15. The busbar 10 includes the second metal. That is, the busbar 10 is formed using a material including aluminum or an aluminum alloy. The busbar 10 including aluminum or the like is bonded to the positive electrode terminal 410 including aluminum or the like of the first battery 1, and the negative electrode terminal 420 including aluminum or the like of the second battery 1.

### (Advantages of Negative Electrode Terminal 420 and Battery 1 Including Negative Electrode Terminal 420)

Advantages of the negative electrode terminal 420 and the battery 1 including the negative electrode terminal 420 according to the first embodiment are explained with reference to FIG. 16 and the like.

At an electrode terminal included in the battery 1, the third member 423 is bonded with the busbar on the facing surface P facing the busbar 10. The first member 421 and the third member 423 are adjacent to each other along the longer-side direction X or shorter-side direction Y of the battery 1 on the side of the facing surface P facing the busbar 10, as depicted in FIG. 16.

According to such a configuration, characteristics of the electrode terminal included in the battery 1 can be enhanced. Specifically, for example, in the electrode terminal, the first member 421 is connected with the charge/discharge body 100, and the third member 423 is connected with the busbar 10. Because of this, by adopting a configuration in which the first member 421 and the third member 423 of the electrode terminal are adjacent to each other, the area size of the electrode terminal in an area along the facing surface P can be reduced. That is, the electrode terminal can be small along the facing surface **P.**

The electrode terminal is applied to the negative electrode terminal 420. According to such a configuration, the negative electrode terminal 420 whose material has been converted from copper to aluminum, and the busbar 10 including aluminum can be bonded sufficiently.

In the negative electrode terminal 420, the first member 421 and the second member 422 are laser-bonded. According to such a configuration, the first member 421 and the second member 422 can be bonded sufficiently by laser-bonding, which is a bonding method with high versatility.

In the negative electrode terminal 420, the first member 421 and the second member 422 are laser-bonded from the side of the facing surface **P.** The facing surface P is a surface on which the negative electrode terminal 420 faces the busbar 10. According to such a configuration, interference between a laser beam and constituent members of the negative electrode terminal 420 positioned on the side of a non-facing surface Q need not be taken into consideration. The constituent members are the body section 421b and the leg section 421c of the first member 421, for example.

The first member 421 of the negative electrode terminal 420 is provided, while being made flush with the third member 423, on the side of the facing surface P facing the busbar 10. With regard to being flush with the third member 423, definition is made while taking into consideration manufacturing-tolerances of the external shapes of the first member 421 and the third member 423. That is, with regard to being flush with the third member 423, a case where the first member 421 protrudes above the third member 423 by approximately several micrometers to several hundred micrometers is included. Similarly, with regard to being flush with the third member 423, a case where the third member 423 protrudes above the first member 421 by approximately several micrometers to several hundred micrometers is included. With regard to being flush with the third member 423, it defines a positional relation between the first member 421 and the third member 423, which positional relation allows bonding in a state where the third member 423 and the busbar 10 are at least partially in contact with each other. According to such a configuration, formation of a gap between the first member 411 and the busbar 10 in a state where the busbar 10 and the third member 423 are bonded can be prevented. In addition, according to such a configuration, even if the busbar 10 and the third member 423 are laser-bonded, entry of a sputter to a gap between the first member 411 and the busbar 10 at the time of laser-bonding can be suppressed. In addition, according to such a configuration, the first member 421 does not protrude toward the busbar 10 beyond the third member 423 in a state where the busbar 10 and the third member 423 are bonded. That is, formation of a gap between the third member 423 and the busbar 10 can be prevented. Accordingly, the third member 423 and the busbar 10 can be bonded sufficiently.

In the negative electrode terminal 420, the first member 421 and the third member 423 are separated in the stacking direction (height direction Z) in which the first member 421 and the second member 422 are stacked. The first member 421 and the third member 423 do not overlap directly in the height direction **Z.** The first member 421 and the third member 423 do not overlap indirectly with another member being interposed therebetween in the height direction **Z.** That is, at a portion where the third member 423 bonded with the busbar 10 is positioned, the third member 423 overlaps only the second member 422 in the height direction **Z.** According to such a configuration, at the portion where the third member 423 bonded with the busbar 10 is positioned, the thickness of the negative electrode terminal 420 in the stacking direction (height direction Z) can be reduced.

In the negative electrode terminal 420, the third member 423 and the busbar 10 are bonded at two or more locations placed across the first member 421. According to such a configuration, for example, even if stress is generated at the busbar 10 due to expansion or contraction of the battery 1, or the like, separation between the third member 423 and the busbar 10 can be suppressed.

In the negative electrode terminal 420, the second member 422 and the third member 423 are formed using clad materials. According to such a configuration, the second member 422 and the third member 423 can be bonded sufficiently. In particular, according to such a configuration, such members including mutually different materials as the second member 422 formed using copper or the like and the third member 423 formed using aluminum or the like can be bonded sufficiently.

### (Negative Electrode Terminal 430 According to Second Embodiment)

### (Configuration of Negative Electrode Terminal 430)

The configuration of a negative electrode terminal 430 according to a second embodiment is explained with reference to FIG. 17. FIG. 17 is an end view depicting the negative electrode terminal 430 and the busbar 10 according to the second embodiment.

The negative electrode terminal 430 is an electrode terminal. Constituent elements of the negative electrode terminal 430 that are the same as constituent elements of the negative electrode terminal 420 are given the same reference characters as those for the negative electrode terminal 420, and explanations thereof are omitted. Constituent elements of the negative electrode terminal 430 that are different from constituent elements of the negative electrode terminal 420 are given different reference characters from those for the negative electrode terminal 420, and are explained using the reference characters.

The negative electrode terminal 430 includes the first member 421, the second member 422, and the third member 423 as depicted in FIG. 17. The second member 422 is laser-bonded, at a welded section U, with the first member 421 from the side of the non-facing surface Q, as depicted in FIG. 17. The non-facing surface Q is a surface opposite to the facing surface P on which the negative electrode terminal 430 faces the busbar 10. The second member 422 is laser-bonded to the head section 431a of the first member 421 along an annular line. The second member 422 and the first member 421 may be laser-bonded along a linear line or along an arc-like line along the shorter-side direction Y or longer-side direction X of the battery 1 depicted in FIG. 1. The second member 422 and the first member 421 may be laser-bonded at dots. The second member 422 may be formed in a cylindrical shape.

### (Advantages of Negative Electrode Terminal 430)

Advantages of the negative electrode terminal 430 according to the second embodiment are explained with reference to FIG. 17.

In the negative electrode terminal 430, the first member 421 and the second member 422 are laser-bonded from the side of the non-facing surface **Q.** The non-facing surface Q is a surface opposite to the facing surface P on which the negative electrode terminal 430 faces the busbar 10. According to such a configuration, the influence of laser-bonding, on the side of the non-facing surface Q, can be suppressed in bonding between the negative electrode terminal 430 positioned on the side of the facing surface P and the busbar 10. In addition, according to such a configuration, the influence of laser-bonding, on the side of the non-facing surface Q, on constituent members of the negative electrode terminal 430 positioned on the side of the facing surface P can be suppressed.

### (Negative Electrode Terminal 440 According to Third Embodiment)

### (Configuration of Negative Electrode Terminal 440)

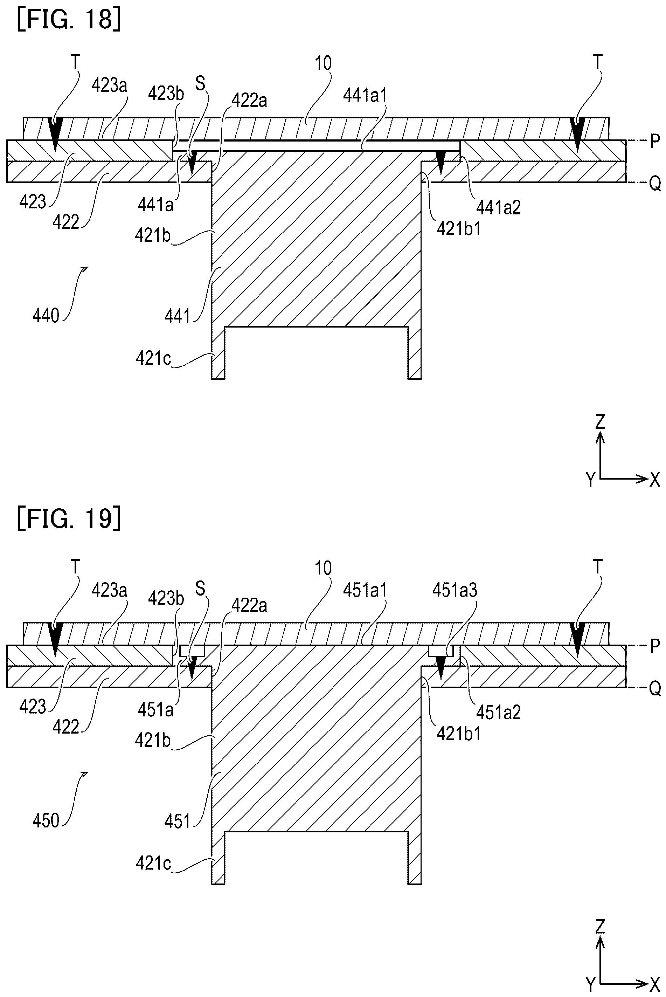

The configuration of a negative electrode terminal 440 according to a third embodiment is explained with reference to FIG. 18. FIG. 18 is an end view depicting the negative electrode terminal 440 and the busbar 10 according to the third embodiment.

The negative electrode terminal 440 is an electrode terminal. Constituent elements of the negative electrode terminal 440 that are the same as constituent elements of the negative electrode terminal 420 are given the same reference characters as those for the negative electrode terminal 420, and explanations thereof are omitted. Constituent elements of the negative electrode terminal 440 that are different from constituent elements of the negative electrode terminal 420 are given different reference characters from those for the negative electrode terminal 420, and are explained using the reference characters.

The negative electrode terminal 440 is partially depressed in a direction away from the busbar 10 relative to the facing surface P facing the busbar 10. The negative electrode terminal 440 includes a first member 441, the second member 422, and the third member 423 as depicted in FIG. 18.

The first member 441 includes the first metal. That is, the first member 441 is formed using a material including copper or a copper alloy.

The first member 441 is partially depressed in a direction away from busbar 10. The first member 441 includes a head section 441a, the body section 421b, and the leg section 421c as depicted in FIG. 18. The head section 441a includes: a facing section 441a1 that faces the busbar 10 along the height direction Z of the battery 1; and an outer peripheral section 441a2 that faces the second member 422 along the longer-side direction X and shorter-side direction Y of the battery **1.** The head section 441a has a length along the stacking direction (height direction Z) which is shorter than the head section 421a of the first member 421. That is, in the first member 441, the head section 441a is depressed in a direction away from the busbar 10. There is a gap between the first member 441 and the busbar 10.

### (Advantages of Negative Electrode Terminal 440)

Advantages of the negative electrode terminal 440 according to the third embodiment are explained with reference to FIG. 18.

The negative electrode terminal 440 is partially depressed in a direction away from the busbar 10. According to such a configuration, when the negative electrode terminal 440 and the busbar 10 are bonded, interference between the busbar 10 and a portion of the negative electrode terminal 440 where the negative electrode terminal 440 is not actively bonded with the busbar 10 can be suppressed. A portion of the negative electrode terminal 440 where the negative electrode terminal 440 is made electrically conductive with the busbar 10 is the third member 423. Accordingly, by making the first member 441 partially depressed in a direction away from the busbar 10, interference between the first member 441 and the busbar 10 in a state where the third member 423 and the busbar 10 are bonded can be suppressed.

A second member 442 may also be depressed in a direction away from the busbar 10. In this case, interference between the second member 442 and the busbar 10 in a state where the third member 423 and the busbar 10 are bonded can be suppressed.

### (Negative Electrode Terminal 450 According to Fourth Embodiment)

### (Configuration of Negative Electrode Terminal 450)

The configuration of a negative electrode terminal 450 according to a fourth embodiment is explained with reference to FIG. 19. FIG. 19 is an end view depicting the negative electrode terminal 450 and the busbar 10 according to the fourth embodiment.

The negative electrode terminal 450 is an electrode terminal. Constituent elements of the negative electrode terminal 450 that are the same as constituent elements of the negative electrode terminal 420 are given the same reference characters as those for the negative electrode terminal 420, and explanations thereof are omitted. Constituent elements of the negative electrode terminal 450 that are different from constituent elements of the negative electrode terminal 420 are given different reference characters from those for the negative electrode terminal 420, and are explained using the reference characters.

The negative electrode terminal 450 includes a first member 451, the second member 422, and the third member 423 as depicted in FIG. 19.

The first member 451 includes the first metal. That is, the first member 451 is formed using a material including copper or a copper alloy.

The first member 451 includes a head section 451a, the body section 421b, and the leg section 421c as depicted in FIG. 19. The head section 451a includes: a facing section 451a1 that faces the busbar 10 along the height direction Z of the battery 1; and an outer peripheral section 451a2 that faces the second member 422 along the longer-side direction X and shorter-side direction Y of the battery 1. The head section 451a includes a recessed section 451a3. The recessed section 451a3 is a portion at which the facing section 451a1 of the first member 451 is depressed partially. The recessed section 451a3 of the first member 451 and the second member 422 are laser-bonded from the side of the facing surface facing the busbar 10. The recessed section 451a3 is laser-bonded to the facing section 451a1 along an annular line. The recessed section 451a3 may be laser-bonded to the facing section 451a1 along an arc-like line. That is, the recessed section 451a3 may be laser-bonded to the facing section 451a1 at discontinuous points.

### (Advantages of Negative Electrode Terminal 450)

Advantages of the negative electrode terminal 450 according to a fourth embodiment are explained with reference to FIG. 19.

In the negative electrode terminal 450, the first member 451 and the second member 422 are laser-bonded from the side of the facing surface P facing the busbar 10 at a portion of the recessed section 451a3 of the first member 451. According to such a configuration, the rigidity of the first member 451 can be kept while a sputter at the time of laser-bonding is confined in the recessed section 451a3. Accordingly, deformation of the first member 451 can be suppressed when the first member 451 is swage-bonded to the negative electrode current collecting board 220, for example. In the first member 451, the position of the recessed section 451a3 is preferably provided on the outer side relative to the body section 421b. Transferring, to the recessed section 451a3, stress generated when the first member 451 and the negative electrode current collecting board 220 are swage-bonded can be suppressed.

### (Negative Electrode Terminal 460 According to Fifth Embodiment)

### (Configuration of Negative Electrode Terminal 460)

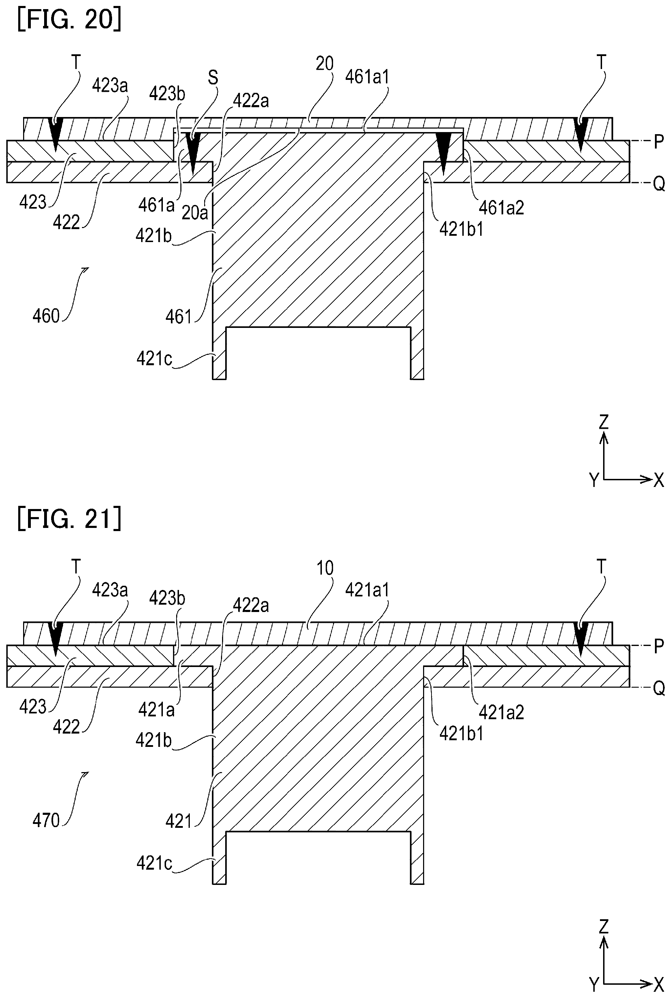

The configuration of a negative electrode terminal 460 according to a fifth embodiment is explained with reference to FIG. 20. FIG. 20 is an end view depicting the negative electrode terminal 460 and a busbar 20 according to the fifth embodiment.

The negative electrode terminal 460 is an electrode terminal. Constituent elements of the negative electrode terminal 460 that are the same as constituent elements of the negative electrode terminal 420 are given the same reference characters as those for the negative electrode terminal 420, and explanations thereof are omitted. Constituent elements of the negative electrode terminal 460 that are different from constituent elements of the negative electrode terminal 420 are given different reference characters from those for the negative electrode terminal 420, and are explained using the reference characters.

The negative electrode terminal 460 partially protrudes in a direction toward the busbar 20 beyond the facing surface P facing the busbar 20. Here, unlike the busbar 10, the busbar 20 includes a recessed section 20a that houses a first member 461 on the side of the facing surface **P.** The negative electrode terminal 460 includes the first member 451, the second member 422, and the third member 423 as depicted in FIG. 20.

The first member 461 includes the first metal. That is, the first member 461 is formed using a material including copper or a copper alloy.

The first member 461 includes a head section 461a, the body section 421b, and the leg section 421c as depicted in FIG. 20. The head section 461a includes: a facing section 461a1 that faces the busbar 10 along the height direction Z of the battery 1; and an outer peripheral section 461a2 that faces the second member 422 along the longer-side direction X and shorter-side direction Y of the battery 1. The head section 461a has a length along the stacking direction (height direction Z) which is longer than the head section 421a of the first member 421. That is, in the first member 461, the head section 461a protrudes in a direction toward the recessed section 20a of the busbar 20. A gap is provided between the first member 461 and the recessed section 20a of the busbar 20. A gap may not be provided between the first member 461 and the recessed section 20a of the busbar 20.

### (Advantages of Negative Electrode Terminal 460)

Advantages of the negative electrode terminal 460 according to the fifth embodiment are explained with reference to FIG. 20.

The negative electrode terminal 460 partially protrudes in a direction toward the busbar 20 beyond the facing surface P facing the busbar 20. The busbar 20 includes the recessed section 20a that houses the first member 461. According to such a configuration, even in a case where the first member 461 protrudes toward the busbar 20 beyond a third member 453 when the negative electrode terminal 460 and the busbar 10 are bonded, the third member 453 and the busbar 20 can be bonded. That is, specifications or manufacturing errors of the first member 461 can be loosened.

The second member 442 may also protrude in a direction toward the busbar 20 beyond the facing surface P facing the busbar 20. The busbar 20 includes a recessed section that houses the second member 442. In this case, interference between the second member 442 and the busbar 20 can be suppressed when the third member 453 and the busbar 20 are bonded. That is, specifications and manufacturing errors of the second member 442 can be loosened.

### (Negative Electrode Terminal 470 According to Sixth Embodiment)

### (Configuration of Negative Electrode Terminal 470)

The configuration of a negative electrode terminal 470 according to a sixth embodiment is explained with reference to FIG. 21. FIG. 21 is an end view depicting the negative electrode terminal 470 and the busbar 10 according to the sixth embodiment.

The negative electrode terminal 470 is an electrode terminal. Constituent elements of the negative electrode terminal 470 that are the same as constituent elements of the negative electrode terminal 420 are given the same reference characters as those for the negative electrode terminal 420, and explanations thereof are omitted. Constituent elements of the negative electrode terminal 470 that are different from constituent elements of the negative electrode terminal 420 are given different reference characters from those for the negative electrode terminal 420, and are explained using the reference characters.

The negative electrode terminal 470 includes the first member 421, the second member 422, and the third member 423 as depicted in FIG. 21. In the negative electrode terminal 470, the first member 421 and the second member 422 are swage-bonded. In the negative electrode terminal 470, the first member 421 and the second member 422 may be swage-bonded, and then the first member 421 and the second member 422 may be laser-bonded.

### (Advantages of Negative Electrode Terminal 470)

Advantages of the negative electrode terminal 470 according to the sixth embodiment are explained with reference to FIG. 21.

In the negative electrode terminal 470, the first member 421 and the second member 422 are swage-bonded. According to such a configuration, the first member 421 and the second member 422 can be bonded by applying mechanical stress to the first member 421 and the second member 422.

In the negative electrode terminal 470, the first member 421 and the second member 422 may be swage-bonded, and then the first member 421 and the second member 422 may be laser-bonded. According to such a configuration, the first member 421 and the second member 422 can be bonded further sufficiently.

### (Negative Electrode Terminal 480 According to Seventh Embodiment)

### (Configuration of Negative Electrode Terminal 480)

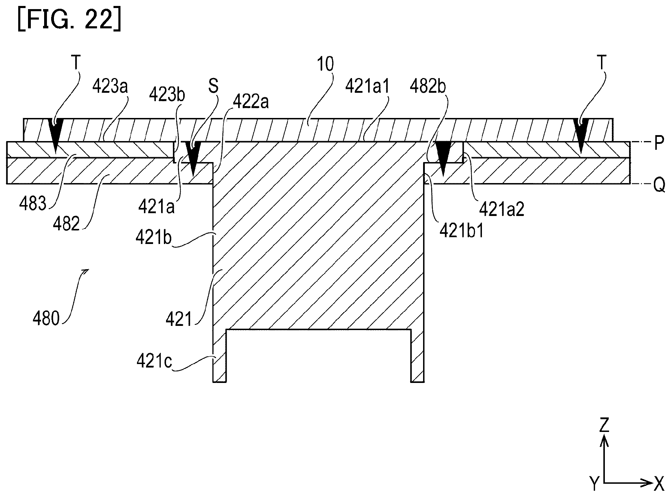

The configuration of a negative electrode terminal 480 according to a seventh embodiment is explained with reference to FIG. 22. FIG. 22 is an end view depicting the negative electrode terminal 480 and the busbar 10 according to the seventh embodiment.

The negative electrode terminal 480 is an electrode terminal. Constituent elements of the negative electrode terminal 480 that are the same as constituent elements of the negative electrode terminal 420 are given the same reference characters as those for the negative electrode terminal 420, and explanations thereof are omitted. Constituent elements of the negative electrode terminal 480 that are different from constituent elements of the negative electrode terminal 420 are given different reference characters from those for the negative electrode terminal 420, and are explained using the reference characters.

The negative electrode terminal 480 includes the first member 421, a second member 482, and a third member 483 as depicted in FIG. 22.

The second member 482 is bonded with the first member 421. The second member 482 includes the first metal. That is, the second member 482 is formed using a material including copper or a copper alloy. The second member 482 has a step section 482b formed by making a portion on the side of the facing surface P facing the busbar 10 be depressed. The second member 482 and the first member 421 are adjacent to each other along the stacking direction (height direction Z) with the step section 482b being interposed therebetween. That is, the second member 482 and the first member 421 face each other in a direction crossing the stacking direction (height direction Z). The thickness in the stacking direction (height direction Z) of the step section 482b of the second member 482 is equivalent to the thickness of the second member 422.

The third member 483 is bonded with the second member 482. The third member 483 includes the second metal. That is, the third member 483 is formed using a material including aluminum or an aluminum alloy. The third member 483 is thinner than the third member 423 by an amount corresponding to the difference between the thicknesses of the second member 482 and the second member 422, the former of which is thicker than the latter. The external shape of the third member 483 is equivalent to a shape formed by making the third member 423 thinner in the stacking direction (height direction Z).

### (Advantages of Negative Electrode Terminal 480)

Advantages of the negative electrode terminal 480 according to the seventh embodiment are explained with reference to FIG. 22.

In the negative electrode terminal 480, the second member 482 and the first member 421 are adjacent to each other along the stacking direction (height direction Z). That is, the second member 482 and the first member 421 face each other in a direction crossing the stacking direction (height direction Z). According to such a configuration, in particular, in the second member 482 and the third member 483 formed using clad materials, in a case where the third member 483 is scraped to make the second member 482 exposed, the second member 482 can be exposed without being dependent on positional misalignment of the boundary surfaces between copper and aluminum of the clad materials. That is, such a configuration is equivalent to a configuration in which part of the second member 482 is also scraped when the third member 483 is scraped while positional misalignment of the boundary surfaces of the clad materials being taken into consideration. Accordingly, the second member 482 and a first member 481 can be bonded sufficiently without being dependent on positional misalignment of the boundary surfaces of the clad materials.

### (Negative Electrode Terminal 490A and Negative Electrode Terminal 490B According to Eighth Embodiment)

### (Configuration of Negative Electrode Terminal 490A)

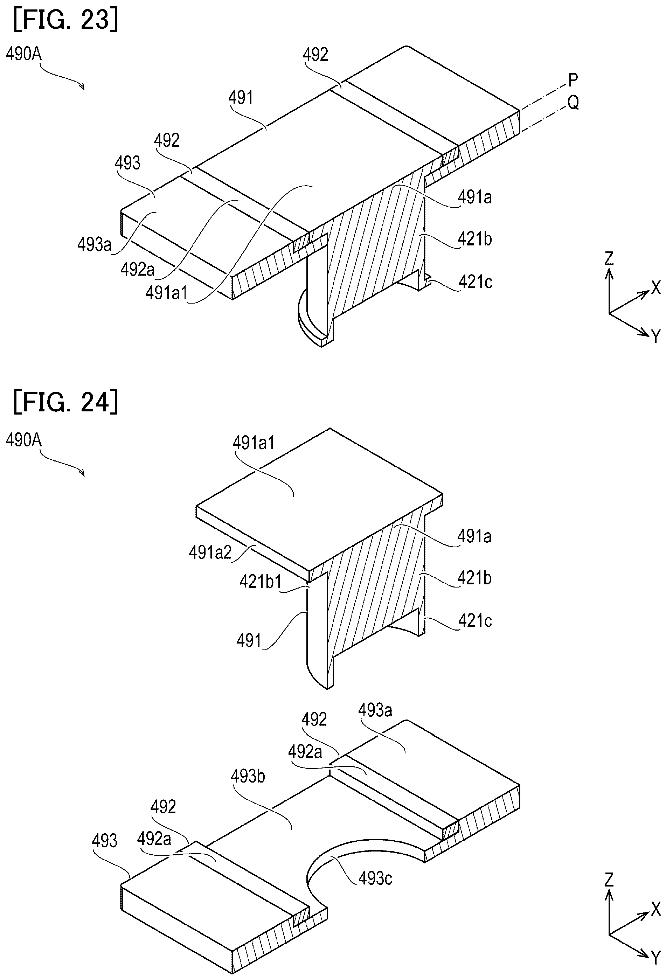

The configuration of a negative electrode terminal 490A according to an eighth embodiment is explained with reference to FIG. 23 and FIG. 24. FIG. 23 is a cross-sectional perspective view depicting the negative electrode terminal 490A according to the eighth embodiment. FIG. 24 is an exploded perspective view depicting the negative electrode terminal 490A depicted in FIG. 23.

The negative electrode terminal 490A is an electrode terminal. Constituent elements of the negative electrode terminal 490A that are the same as constituent elements of the negative electrode terminal 420 are given the same reference characters as those for the negative electrode terminal 420, and explanations thereof are omitted. Constituent elements of the negative electrode terminal 490A that are different from constituent elements of the negative electrode terminal 420 are given different reference characters from those for the negative electrode terminal 420, and are explained using the reference characters.

The negative electrode terminal 490A includes a first member 491, a pair of second members 492, and a third member 493 as depicted in FIG. 23 and FIG. 24.

The first member 491 is electrically connected with the charge/discharge body 100 of the battery 1 via the negative electrode current collecting board 220. The first member 491 includes the first metal. That is, the first member 491 is formed using a material including copper or a copper alloy.

The first member 491 includes a head section 491a, the body section 421b, and the leg section 421c as depicted in FIG. 23 and FIG. 24. The head section 491a is formed in a board shape as depicted in FIG. 24. The head section 491a includes a facing section 491a1 that faces the busbar 10 along the height direction Z of the battery 1, as depicted in FIG. 24. The head section 491a includes an outer section 491a2 that faces the second member 422 along the shorter-side direction Y of the battery 1, as depicted in FIG. 24.

The pair of second members 492 is bonded with the first member 491 as depicted in FIG. 23. The second members 492 include the first metal. That is, the second members 492 are formed using a material including copper or a copper alloy.

The pair of second members 492 is formed in a prism shape as depicted in FIG. 24. The second members 492 include facing sections 492a that face the busbar 10 along the height direction Z of the battery 1. The second members 492 contact the outer sections 491a2 of the first member 491 along the shorter-side direction Y of the battery **1.** Along the boundaries between the second members 492 and the first member 491, the second members 492 are laser-bonded with the first member 491 from the side of the facing surface **P.**
That is, the second members 492 and the first member 491 are laser-bonded in a state where the second members 492 and the first member 491 are caused to abut against each other. The second members 492 and the first member 491 may be bonded at dots.

The third member 493 is bonded with the second members 492 as depicted in FIG. 23. The third member 493 includes the second metal. That is, the third member 493 is formed using a material including aluminum or an aluminum alloy. The third member 493 is interatomically-bonded with the second members 492. That is, the third member 493 formed using aluminum or the like and the second members 492 formed using copper or the like are formed using clad materials. The third member 493 and the second members 492 may be swage-bonded.

The third member 493 is formed in a board shape as depicted in FIG. 24. The third member 493 includes a facing section 493a that faces the busbar 10 along the height direction Z of the battery **1.** The third member 493 includes a recessed depressed section 493b as depicted in FIG. 24. The first member 491 and the second members 492 are attached to the depressed section 493b. The third member 493 includes an insertion section 493c penetrating the depressed section 493b as depicted in FIG. 24. The body section 421b of the first member 491 is inserted into the insertion section 493c. The third member 493, the second members 492, and the first member 491 are adjacent to each other along the longer-side direction X of the battery 1 on the side of the facing surface P facing the busbar 10, as depicted in FIG. 23.

The third member 493 is laser-bonded with the busbar 10 on the side of the facing surface P facing the busbar 10. The third member 493 and the busbar 10 are laser-bonded in a state where the third member 493 and the busbar 10 are stacked along the height direction Z of the battery 1, that is, in a state where the third member 493 and the busbar 10 are superimposed. The third member 493 is bonded with the busbar 10 at two or more locations placed across the first member 491 and the pair of second members 492 along a direction crossing the height direction **Z.** The third member 493 and the busbar 10 are laser-bonded along a linear line along the shorter-side direction of the battery. The third member 493 and the busbar 10 may be laser-bonded at dots.

In the negative electrode terminal 490A, the first member 491 and the second members 492 are made electrically conductive with each other by lap-joint laser-bonding. The first member 491 and the second members 492 are not swage-bonded. The second members 492 and the third member 493 are made electrically conductive with each other by being formed using clad materials.

The first member 491 of the negative electrode terminal 490A may be depressed in a direction away from the busbar 10 similarly to the negative electrode terminal 440 according to the third embodiment. The first member 491 of the negative electrode terminal 490A may protrude toward the busbar 20 beyond the facing surface P facing the busbar 20 similarly to the negative electrode terminal 460 according to the fifth embodiment.

### (Configuration of Negative Electrode Terminal 490B)

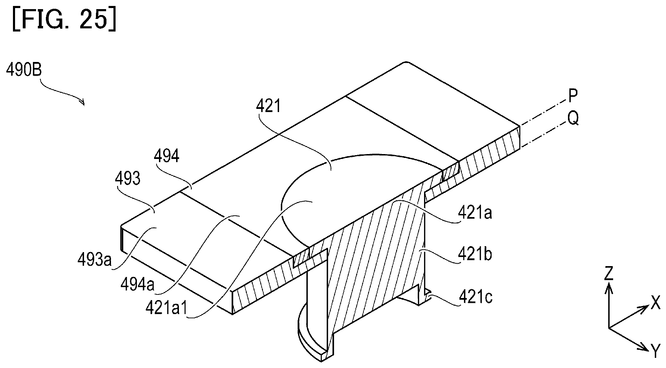

The configuration of the negative electrode terminal 490B according to a modification example of the eighth embodiment is explained with reference to FIG. 25. FIG. 25 is a cross-sectional perspective view depicting the negative electrode terminal 490B according to the modification example of the eighth embodiment.

The negative electrode terminal 490B is an electrode terminal. Constituent elements of the negative electrode terminal 490B that are the same as constituent elements of the negative electrode terminal 420 and the negative electrode terminal 490A are given the same reference characters as those for the negative electrode terminal 420 and the negative electrode terminal 490A, and explanations thereof are omitted. Constituent elements of the negative electrode terminal 490B that are different from constituent elements of the negative electrode terminal 420 and the negative electrode terminal 490A are given different reference characters from those for the negative electrode terminal 420 and the negative electrode terminal 490A, and are explained using the reference characters.

The negative electrode terminal 490A includes the first member 421, a second member 494, and the third member 493 as depicted in FIG. 25. The second member 494 is formed in a shape different from the shape of the second members 492. The external shape of the second member 494 is a board shape including the external shape of the pair of second members 492. The internal shape of the second member 494 is identical to that of the second member 422 depicted in FIG. 13. The second member 494 includes a facing section 494a facing the busbar 10 along the height direction Z of the battery **1.**

### (Advantages of Negative Electrode Terminal 490A and Negative Electrode Terminal 490B)

Advantages of the negative electrode terminal 490A and the negative electrode terminal 490B according to the eighth embodiment are explained with reference to FIG. 23 to FIG. 25.

In the negative electrode terminal 490A, the first member 491 and the third member 493 are not swage-bonded. According to such a configuration, the influence of physical deformations of the first member 491 and the third member 493 on the negative electrode terminal 490A can be prevented. In the negative electrode terminal 490B, the first member 421 and the third member 493 are not swage-bonded.
According to such a configuration, the influence of physical deformations of the first member 421 and the third member 493 on the negative electrode terminal 490B can be prevented.

### (Negative Electrode Terminal According to Ninth Embodiment) (Configuration of Negative Electrode Terminal)

The configuration of the negative electrode terminal according to a ninth embodiment is equivalent to the configurations of all the embodiments excluding the configuration according to the fifth embodiment depicted in FIG. 20 among the first embodiment to the eighth embodiment.

The electrode terminal is applied to the configuration including the first member 421, the second member 422, and the third member 423 according to the first embodiment depicted in FIG. 16, for example. The first member 421 does not protrude toward the busbar 10 beyond the third member 423 on the side of the facing surface P facing the busbar 10. Here, the first member 421 of the negative electrode terminal is provided, while being made flush with the third member 423, on the side of the facing surface P facing the busbar 10. With regard to being flush with the third member 423, this is defined while manufacturing-tolerances of the external shapes of the first member 421 and the third member 423 being taken into consideration. That is, with regard to being flush with the third member 423, a case where the first member 421 protrudes above the third member 423 by approximately several micrometers to several hundred micrometers is included. Similarly, with regard to being flush with the third member 423, a case where the third member 423 protrudes above the first member 421 by approximately several micrometers to several hundred micrometers is included. With regard to being flush with the third member 423, it defines a positional relation between the first member 421 and the third member 423, which positional relation allows bonding in a state where the third member 423 and the busbar 10 are at least partially in contact with each other. The third member 423 and the busbar 10 are bonded across the first member 421. The third member 423 and the busbar 10 are bonded across the second member 422.

Similarly, the electrode terminal is applied to the configuration including the first member 491, the second members 492, and the third member 493 according to the eighth embodiment depicted in FIG. 23 and FIG. 24, for example. The first member 491 does not protrude toward the busbar 10 beyond the third member 493 on the side of the facing surface P facing the busbar 10. Here, the first member 491 of the negative electrode terminal is provided, while being made flush with the third member 493, on the side of the facing surface P facing the busbar 10. With regard to being flush with the third member 493, this is defined while manufacturing-tolerances of the external shapes of the first member 491 and the third member 493 being taken into consideration. The third member 493 and the busbar 10 are bonded across the first member 491. The third member 493 and the busbar 10 are bonded across the pair of second members 492. The third member 493 and the busbar 10 may be bonded across either one second member 492 of the pair of second members 492.

### (Advantages of Negative Electrode Terminal)

Advantages of the negative electrode terminal according to the ninth embodiment are explained.

The negative electrode terminal attains the advantages of some embodiments or all the embodiments excluding the fifth embodiment depicted in FIG. 20 among the first embodiment to the eighth embodiment.

### (Other Embodiments of Negative Electrode Terminal and Battery)

The battery according to the present invention can be configured as appropriate on the basis of the content described in Claims, without being limited to the configurations described in the embodiments.

The electrode terminal according to the present invention can be configured by combining the configurations of the electrode terminals according to the first embodiment to the eighth embodiments as desired.

The electrode terminal according to the present invention is not limited to a negative electrode terminal. The electrode terminal according to the present invention can be applied to a positive electrode terminal. According to such a configuration, the positive electrode terminal 410 whose material has been converted from aluminum to copper, and the busbar including copper can be bonded sufficiently.

The battery according to the present invention is not limited to a lithium ion battery. The battery according to the present invention can be applied to a nickel-metal hydride battery or a lead battery, for example. The battery according to the present invention is not limited to a secondary battery. The battery according to the present invention can be applied to a primary battery. The charge/discharge body of the battery according to the present invention is not limited to a charge/discharge body of a winding type having a wound bundle of a positive electrode, a separator, and a negative electrode, each of which is formed in an elongated shape. A charge/discharge body of a stacked type formed by alternately stacking a plurality of positive electrodes, separators, and negative electrodes, each of which is formed in a rectangular shape, can be applied as the charge/discharge body of the battery according to the present invention. A charge/discharge body of a stacked type formed by alternately providing, with respect to one separator which is formed in an elongated shape, a plurality of positive electrodes each of which is formed in a relatively shortened shape and a plurality of negative electrodes each of which is formed in a relatively shortened shape, while making the positive electrodes and the negative electrodes face each other with the separator being interposed therebetween can be applied to the charge/discharge body of the battery according to the present invention. In the thus-configured charge/discharge body, the positive electrodes and the negative electrodes face each other with the separator being interposed therebetween, by folding and stacking the separator. The battery according to the present invention does not necessarily have a configuration provided with one charge/discharge body. The battery according to the present invention can be applied to a configuration provided with two or more charge/discharge bodies. The battery according to the present invention does not necessarily have a configuration in which the charge/discharge body is sealed with a container and a lid. The battery according to the present invention can be applied to a configuration in which the charge/discharge body is sealed with a laminate film.

### Description of Reference Characters

1: Battery
10: Busbar (conductive member)
20: Busbar (conductive member)
20a: Recessed section
100: Charge/discharge body
400: Electrode terminal
410: Positive electrode terminal (electrode terminal)
420: Negative electrode terminal (electrode terminal)
420b: Insertion section
421: First member
421a: Head section
421a1: Facing section
421a2: Outer peripheral section
421b: Body section
421b1: Outer peripheral section
421c: Leg section
422: Second member
422a: First insertion section
423: Third member
423a: Facing section
423b: Second insertion section
430: Negative electrode terminal (electrode terminal)
431a: Head section
440: Negative electrode terminal (electrode terminal)
441: First member
441a: Head section
442: Second member
450: Negative electrode terminal (electrode terminal)
451: First member
451a: Head section
451a3: Recessed section
453: Third member
460: Negative electrode terminal (electrode terminal)
461: First member
461a: Head section
470: Negative electrode terminal (electrode terminal)
480: Negative electrode terminal (electrode terminal)
482: Second member
482b: Step section
483: Third member
490A: Negative electrode terminal (electrode terminal)
490B: Negative electrode terminal (electrode terminal)
491: First member
491a: Head section
491a1: Facing section
491a2: Outer section
492: Second member
492a: Facing section
492b
493: Third member
493a: Facing section
493b: Depressed section
493c: Insertion section
494: Second member
494a: Facing section
**P:** Facing surface facing busbar 10 or busbar 20
Q: Non-facing surface
S: Welded section
T: Welded section
U: Welded section
X: Longer-side direction of battery 1
Y: Shorter-side direction of battery 1
Z: Height direction of battery 1.

## Claims

1. An electrode terminal comprising:
a first member that is electrically connected with a charge/discharge body of a battery, and includes a first metal;
a second member that includes a first insertion section into which the first member is inserted, the second member being bonded with the first member and including the first metal; and
a third member that includes a second insertion section into which the first member is inserted, the third member being bonded with the second member and including a second metal which is a material different from the first metal, wherein
the third member is bonded with a conductive member including the second metal, on a facing surface facing the conductive member that electrically connects a first battery and a second battery, and
the first member and the third member are adjacent to each other on a side of the facing surface.

2. The electrode terminal according to claim **1,** wherein
the first member and the second member are laser-bonded.

3. The electrode terminal according to claim **2,** wherein
the first member and the second member are bonded from the side of the facing surface.

4. The electrode terminal according to claim **2,** wherein
the first member and the second member are bonded from a side of a non-facing surface opposite to the facing surface.

5. The electrode terminal according to claim **1,** wherein
the first member and the third member are provided, while being made flush with each other, on the side of the facing surface.

6. The electrode terminal according to claim **1,** wherein
the first member is partially depressed in a direction away from the conductive member relative to the facing surface.

7. The electrode terminal according to claim **6,** wherein
the first member and the second member are laser-bonded from the side of the facing surface at a portion where the first member is partially depressed.

8. The electrode terminal according to claim **1,** wherein
the first member and the third member are separated in a stacking direction in which the first member and the second member are stacked.

9. The electrode terminal according to claim **1,** wherein
the third member and the conductive member are bonded at two or more locations placed across the first member.

10. The electrode terminal according to claim **1,** wherein
the first member and the second member are swage-bonded.

11. The electrode terminal according to claim **1,** wherein
the second member and the third member are formed using a clad material.

12. The electrode terminal according to claim **1,** wherein
the first metal is copper or a copper alloy,
the second metal is aluminum or an aluminum alloy, and
the electrode terminal is applied to a negative electrode terminal.

13. The electrode terminal according to claim **1,** wherein
the first member protrudes in a direction toward the conductive member beyond the facing surface, and
the conductive member includes a recessed section that houses the first member on the side of the facing surface.

14. A battery comprising:
the electrode terminal according to claim **1;** and
a charge/discharge body electrically connected with the electrode terminal.

15. An electrode terminal comprising:
a first member that is electrically connected with a charge/discharge body of a battery, and includes a first metal;
a second member that is bonded with the first member, and includes the first metal; and
a third member that is bonded with the second member, and includes a second metal which is a material different from the first metal, wherein
the third member is not swage-bonded with the first member,
the third member is bonded with a conductive member including the second metal, on a facing surface facing the conductive member that electrically connects a first battery and a second battery, and
the first member, the second member, and the third member are adjacent to each other on a side of the facing surface.

16. An electrode terminal comprising:
a first member that is electrically connected with a charge/discharge body of a battery, and includes a first metal;
a second member that is bonded with the first member, and includes the first metal; and
a third member that is bonded with the second member, and includes a second metal which is a material different from the first metal, wherein
the third member is bonded with a conductive member including the second metal, on a facing surface facing the conductive member that electrically connects a first battery and a second battery,
the first member does not protrude toward the conductive member beyond the third member on a side of the facing surface, and
the third member and the conductive member are bonded across the first member.
